# DEMANDE DE BREVET EUROPEEN

(11) **EP 1 976 083 A1**
(43) Date de publication de la demande: **01.10.2008**
(21) Numéro de dépôt: 08290272.7
(22) Date de dépôt: 21.03.2008
(51) Int. Cl.: H02B 1/30

(54) **Armoire pour appareils électriques, comportant un socle présentant une trappe de passage pour des câbles**

(30) Priorité: 30.03.2007 FR 0754168
(71) Demandeur: LEGRAND FRANCE, 87000 Limoges (FR); LEGRAND SNC, 87000 Limoges (FR)
(72) Inventeur: Huys, Alain, 76850 Bosc-Le-Hard (FR); Loizel, Jérôme, 76190 Yvetot (FR)
(74) Mandataire: Lepelletier-Beaufond, François

(57) **Abrégé**

L'armoire pour appareils électriques comporte un socle (4) présentant une trappe de passage pour des câbles, caractérisée en ce qu'elle comporte en outre un boîtier (5) saillant dudit socle (4), lequel boîtier (5) comporte une face supérieure présentant une ouverture (46) pour goulotte (47) et une face latérale présentant une ouverture de passage en regard de ladite trappe dudit socle (4).

## Description

### DOMAINE DE L'INVENTION

La présente invention a trait au domaine des armoires pour appareils électriques. L'invention concerne plus particulièrement une armoire présentant un socle et une trappe de passage pour des câbles qui sont disposés, à l'extérieur de l'armoire, dans une goulotte de cheminement de câbles.

### ARRIERE-PLAN TECHNOLOGIQUE

Pour le raccord entre les goulottes et les armoires, on connaît des trappes prévues dans le socle d'armoire ou sur les panneaux latéraux ou supérieur de l'armoire. Ces trappes sont traversées par les câbles qui s'étendent, dans cette zone, transversalement au panneau latéral ou supérieur ou au panneau de socle et qui, à l'extérieur de l'armoire, sont réorientés par l'installateur pour être disposés dans la goulotte.

### OBJET DE L'INVENTION

Le but de l'invention est de fournir une armoire de ce type qui soit commode et simple à raccorder à une goulotte de cheminement de câbles.

A cet effet, l'invention propose une armoire pour appareils électriques, laquelle armoire comporte un socle présentant une trappe de passage pour des câbles, caractérisée en ce qu'elle comporte en outre un boîtier saillant dudit socle, lequel boîtier comporte une face supérieure présentant une ouverture pour goulotte et une face latérale présentant une ouverture de passage en regard de ladite trappe dudit socle.

L'armoire selon l'invention est particulièrement commode à raccorder à une goulotte disposée le long de l'une de ses parois latérales puisqu'une telle goulotte peut directement déboucher dans l'ouverture prévue dans la face supérieure du boîtier, la portion des câbles située entre le débouché de la goulotte et la trappe du socle étant protégée par le boîtier.

Selon des caractéristiques préférées, prises seules ou en combinaison :
- ladite face latérale dudit boîtier présentant ladite ouverture de passage est disposée transversalement à une deuxième face latérale qui comporte également une ouverture passage, ces deux dites faces présentant le même contour ;
- lesdites faces latérales présentent le même contour que le côté dudit socle contre lequel ledit boîtier est disposé ;
- ledit boîtier comporte de part et d'autre de chaque dite ouverture de passage des moyens de fixation adaptés à la fixation dudit boîtier sur ledit côté ;
- ladite ouverture de passage de la face latérale qui s'étend transversalement audit côté est obturée par une plaque d'obturation, lesdits moyens de fixation étant également adaptés à la fixation de ladite plaque d'obturation ;
- ledit boîtier comporte une troisième face latérale disposée obliquement par rapport à chacune des dites faces latérales comportant une dite ouverture de passage ;
- ledit boîtier comporte un couvercle dans lequel est ménagée ladite ouverture pour goulotte, ledit couvercle étant plat, orienté parallèlement à ladite face supérieure dudit socle et présentant un contour adapté au contour déterminé par lesdites faces latérales, ledit couvercle étant réversible de sorte que ladite ouverture présente une orientation prédéterminée par rapport à ladite trappe ou une orientation transversale à ladite orientation prédéterminée ;
- ledit couvercle comporte deux dites ouvertures pour goulotte ;
- lesdites ouvertures pour goulotte sont rectangulaires et de mêmes dimensions ;
- lesdites ouvertures pour goulotte sont disposées parallèlement l'une à l'autre ;
- l'une desdites ouvertures est obturée par une portion défonçable ;
- ledit couvercle comporte une troisième ouverture pour goulotte similaire auxdites deux ouvertures pour goulotte, lesdites ouvertures étant parallèles entre elles ;
- ladite troisième ouverture pour goulotte présente une longueur inférieure à celle desdites autres ouvertures pour goulotte ;
- ledit boîtier comporte une première pièce en coin disposée à la jonction entre lesdites faces latérales disposées transversalement l'une par rapport à l'autre et une deuxième pièce en coin et une troisième pièce en coin chacune disposée à une extrémité d'une dite face latérale respective, à l'opposé de ladite première pièce en coin, ledit socle comportant en outre une paroi latérale fixée auxdites deuxième et troisième pièces en coin:
- une plaque d'obturation fixée auxdites première et deuxième pièces en coin ;
- ladite paroi latérale présente une portion disposée transversalement à la bissectrice de l'angle formé par lesdites faces latérales transversales l'une à l'autre ; et/ou
- ledit socle de l'armoire comporte pour côtés un panneau frontal, un panneau de fond et deux panneaux latéraux, ledit boîtier étant disposé contre l'un ou l'autre desdits panneaux latéraux.

### BREVE DESCRIPTION DES DESSINS

Les caractéristiques et avantages de l'invention ressortiront de la description qui suit, donnée à titre d'exemple préféré, mais non limitatif, en référence aux dessins annexés, sur lesquels :
- la figure 1 est une vue en perspective d'une armoire selon l'invention dont on représenté l'ossature, le socle et les panneaux à l'exception des panneaux de porte, une grille de cheminement de câble étant disposée sur le boîtier ;
- la figure 2 est une vue en perspective du boîtier et de la grille de la figure 1, prise selon un autre angle ;
- la figure 3 est une vue similaire à celle de la figure 2, prise selon un autre angle ;
- la figure 4 est une vue similaire à celle de la figure 3, avec des câbles représentés et une partie du boîtier arrachée ;
- la figure 5 est une vue du boîtier et de la grille de la figure 4, prise de dessous avec le faisceau de câbles représenté divergent ;
- la figure 6 est une vue en perspective du boîtier et de la grille de la figure 2 avec le couvercle qui est positionné retourné ;
- la figure 7 est une vue similaire à celle de la figure 6, prise selon un autre angle ;
- la figure 8 est une vue similaire à celle de la figure 1 avec le boîtier des figures 6 et 7 ;
- la figure 9 est une vue similaire à celle de la figure 1 avec le boîtier placé du côté de l'autre panneau latéral de l'armoire ; et
- la figure 10 est une vue similaire à celle de la figure 1 pour un boîtier selon un autre de mode de réalisation.

### DESCRIPTION DETAILLEE D'UN EXEMPLE DE REALISATION

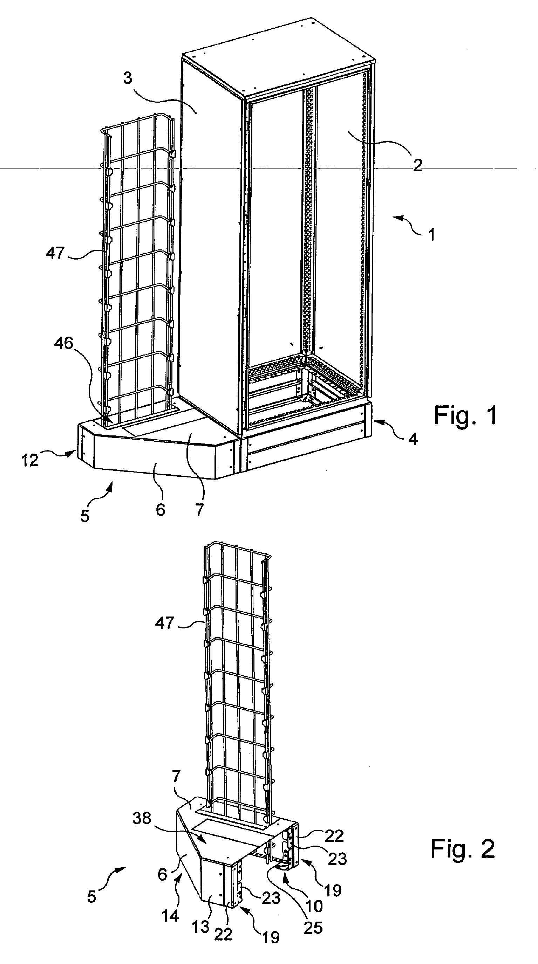

La figure 1 montre une armoire 1 pour appareils électriques dont on a représenté l'ossature qui comporte plusieurs montants et traverses ainsi que des panneaux latéraux 2, 3 qui s'étendent du haut de l'armoire jusqu'au socle 4 de celle-ci. Ce socle 4 est un cadre qui comporte pour côtés un panneau de front, un panneau de fond et deux panneaux latéraux qui délimitent un espace principalement pour les câbles. Chaque panneau du socle 4 comporte ici deux demi-panneaux l'un au-dessus de l'autre.

Dans le prolongement du socle 4 de l'armoire est disposé un boîtier 5. Ce boîtier 5 comporte une face supérieure et une face inférieure, parallèles l'une à l'autre et transversalement à ces faces supérieure et inférieure, s'étendent des faces latérales.

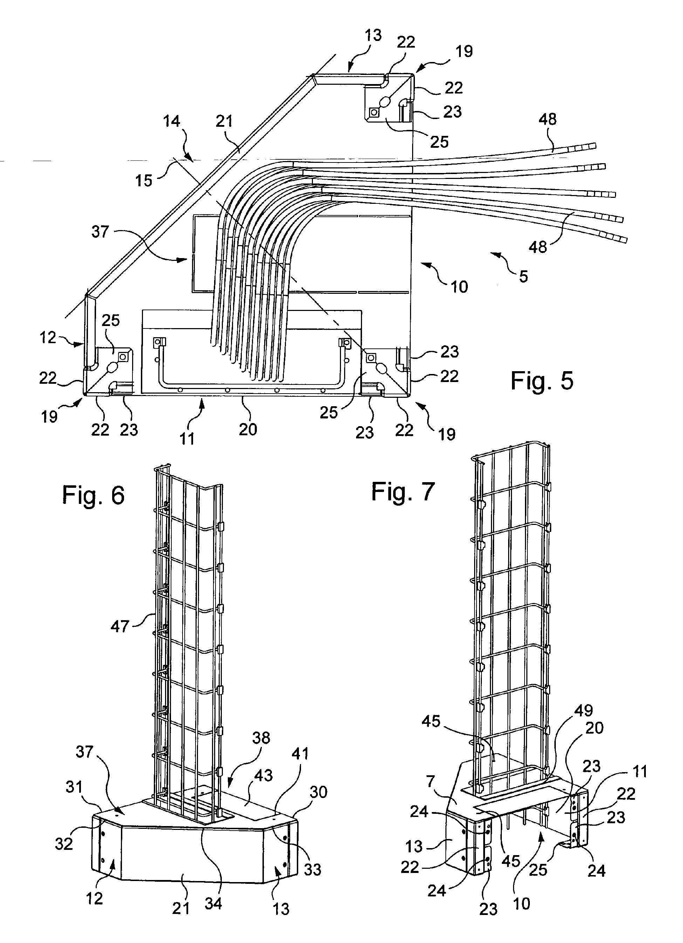

Ce boîtier 5 comporte une paroi latérale 6 et un couvercle 7. La paroi latérale 6 présente une portion de fixation 10, une portion transversale 11 (fig. 5), deux portions courtes 12, 13 et une portion oblique 14, chacune de ces portions 10 à 14 correspondant à une face latérale que l'on repère avec la même référence numérique.

Toutes ces portions 10 à 14 présentent une hauteur semblable qui correspond ici à la hauteur du socle 4. Selon une variante de réalisation non représentée, la hauteur du boîtier 5 est inférieure à celle du socle 4.

La portion 10 et la portion 11 sont disposées transversalement l'une par rapport à l'autre et présentent une longueur équivalente.

La portion courte 12 est disposée transversalement à la portion transversale 11, à l'opposé de la portion de fixation 10, et parallèlement à cette portion 10. La portion courte 12 présente une longueur très inférieure à celle de la portion transversale 11.

La portion courte 13 est transversale à la portion de fixation 10 et parallèle à la portion de fixation 11, les deux portions courtes 12, 13 ayant la même longueur.

La portion oblique 14 est orientée transversalement à la bissectrice 15 de l'angle droit formé par les portions 10 et 11.

Ainsi, la paroi latérale 6 présente le périmètre d'un carré dont un angle a été largement abattu et présente une symétrie par rapport à la bissectrice 15 (fig.5).

La paroi 6 comporte cinq pièces principales : trois coins en équerre 19, une plaque d'obturation 20 et une plaque pliée 21.

Chaque coin 19 est disposé à l'un des trois angles formés respectivement par les portions 11 et 12, les portions 10 et 11, et les portions 10 et 13. Chaque coin 19 comporte deux platines 22 rectangulaires, disposées transversalement l'une à l'autre qui présentent une hauteur équivalente à celle du socle 4. Chaque platine 22 porte, à partir de sa tranche opposée à l'autre platine 22, et dans son plan, deux petits supports 23 rectangulaires en saillie. Les supports 23 présentent des orifices de fixation 24.

Chaque coin 19 présente en outre à ses deux extrémités haute et basse des supports 25 carrés qui s'étendent, vers l'intérieur, parallèlement aux faces du boîtier 5. Chaque support 25 est pourvu d'un trou pour une vis de fixation.

Les supports 23 des coins 19 situées du côté des portions 12 et 13 permettent la fixation de la pièce pliée 21 qui forme d'une pièce la portion 14 et une grande partie des portions 12 et 13, cette pièce 21 étant fixée par des vis (non représentées) sur les supports 23. La pièce 21 est une plaque rectangulaire dont les deux extrémités sont repliées l'une vers l'autre, les lignes de pliage étant parallèles entre elles.

Les supports 23 des coins 19 situées aux extrémités de la paroi 11 permettent de fixer au moyen de vis (non représentées) la plaque d'obturation 20 qui vient fermer l'ouverture existant entre les deux coins 19 tandis que l'ouverture entre les coins 19 de la portion 10 reste ouverte pour permettre un passage du câble comme décrit ci-après. Par le positionnement des coins 19, l'ouverture obturée de la portion 11 et l'ouverture de la portion 10 sont de mêmes dimensions à savoir de même hauteur et de même largeur.

La portion de fixation 10 présente donc une ouverture sur une très grande partie de sa longueur. Les supports 23-permettent de fixer le boîtier 5 au socle 4 qui présentent des trous de fixation (non représentés) en correspondance avec ceux des supports 23.

Le couvercle 7 est une fine plaque d'acier dont le périmètre correspond au contour de la paroi latérale 6 de sorte que les bords du couvercle 7 puissent reposer sur des rebords que présente la paroi latérale 6. De tels rebords sont prévus sur les bords de la paroi latérale 6 du côté de la face supérieure et du côté de la face inférieure.

Le périmètre défini par la paroi latérale 6 est donc tel qu'il existe une symétrie par rapport à la bissectrice 15.

Le couvercle 7 présente la même symétrie que la paroi latérale 6. Le couvercle 7 présente des bords 30, 31, 32, 33, 34 qui sont adaptés à venir contre les rebords des portions respectivement 10, 11, 12, 13, 14.

Le couvercle 7 étant symétrique, si l'on place celui-ci à l'envers, les bords 30, 31, 32, 33, 34 viendront contre les rebords des portions 11, 10, 13, 12 et 14 de la paroi latérale 6.

Le couvercle 7 présente une face 36 et une face 37. Lorsqu'il est monté sur la paroi 6, la face supérieure 38 du boîtier 5 se confond avec la face du couvercle 7 disposée vers l'extérieur.

Le couvercle 7 présente deux découpes rectangulaires 40, 41.

La découpe rectangulaire 40 est adaptée à être obturée par une partie défonçable 42 tandis que la découpe rectangulaire 41 est adaptée à être obturée par une portion défonçable 43. Les portions défonçables 42, 43 sont reliées au reste du couvercle 7 par des pontets de très petite taille (non représentés) facilement déchirables à l'enfoncement de la partie défonçable 42, 43.

La découpe 41 s'étend le long du bord 31 c'est-à-dire que la découpe 41 s'étend à partir du bord 31 vers le bord 33, la longueur de la découpe 41 s'étendant selon la direction du bord 31. La découpe 41 est de plus située légèrement à l'écart du bord 30 et légèrement à l'écart du bord 32.

La découpe 40, de même dimension que la découpe 41 s'étend parallèlement à cette dernière tout en étant décalée vers le bord 30 puisque l'un des bords de la découpe 40, selon la largeur, s'étend le long du bord 30. La découpe 40 s'étend quasiment jusqu'au bord 34 oblique.

Le couvercle 7 présente des trous de fixation 45 qui viennent en regard des trous de fixation des supports 25 pour la fixation du couvercle 7 à la paroi latérale 6.

Le socle 4 présente un premier agencement avec le couvercle 7 disposé avec sa face 36 disposée vers l'extérieur. Le bord 31 est alors disposé contre le rebord de la paroi 11.

Dans cet agencement représenté à la figure 2, la partie défonçable 43 a été arrachée de sorte qu'il existe une ouverture rectangulaire 46 dans le couvercle 7. La découpe 41 est pourvue d'un balai d'étanchéité 49.

Les dimensions de cette ouverture 46 sont adaptées pour accueillir une grille de cheminement de câbles 47 formée de fils métalliques rigides soudés entre eux.

La grille 47 est montée sur le boîtier 5 en faisant traverser une extrémité de la grille 47 à travers l'ouverture 46 jusque dans l'espace délimité par la paroi 6 et le couvercle 7. La correspondance des dimensions permet à la grille 47 d'être maintenue transversale au boîtier 6.

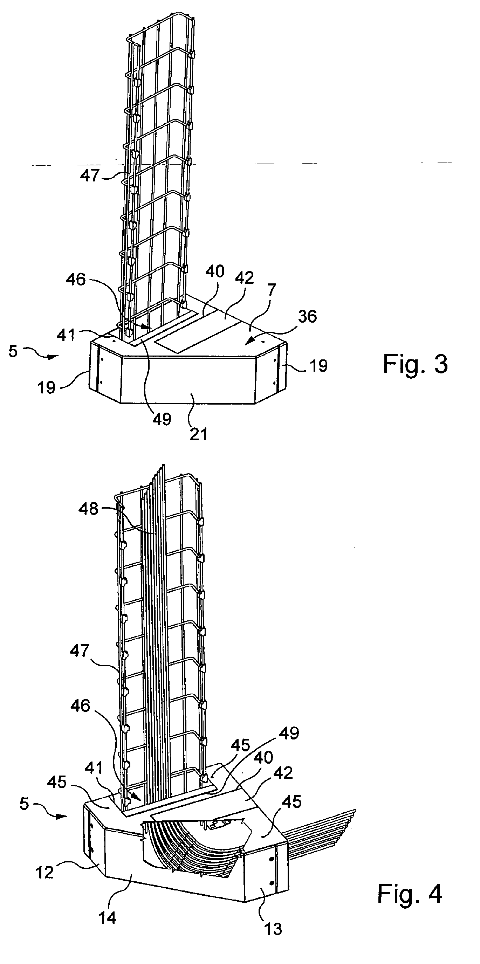

Dans cet agencement du socle 4 et ce positionnement de la grille 47 dans l'ouverture 46 correspondant à la découpe 41, des câbles 48 en provenance et en direction de l'armoire 1 passent de la grille 47 à l'armoire par le boîtier 5 en traversant l'ouverture 46, effectuent un changement de direction dans l'espace délimité par le boîtier 5 et quittent le boîtier 5 à travers l'ouverture définie par la paroi de fixation 10 (figure 4) pour entrer dans l'armoire par la trappe du socle 4 de cette armoire (figure 5). Les câbles 48 sont ici représentés divergents au niveau de l'ouverture de la paroi 10 pour traverser cette ouverture et se diriger dans l'armoire vers les différents appareils électriques.

Un tel agencement du couvercle 7 et de la grille 47 permet par exemple dans le cas de la figure 1 où l'armoire et la grille seraient positionnées contre un mur de faire monter les câbles dans la grille 47 le long d'un mur, la grille 47 étant alors au plus près du mur. Et la portion oblique 94 permet de limiter l'encombrement du socle 4 au sol et d'éviter la présence d'un angle au sol tout en permettant à l'espace situé dans le boîtier 5 d'être suffisant pour accueillir les câbles 48 et permettre leur changement d'orientation.

L'agencement des figures 6, 7 et 8 correspond à un couvercle 7 pour lequel la face 37 opposée à la face 36 est choisie comme face externe.

La découpe 41 est alors positionnée contre l'armoire. Dans le choix de positionnement de grilles représenté, celle-ci est positionnée dans l'ouverture correspondant à la découpe 40 pour laquelle la partie défonçable 42 a été arrachée, la grille 47 étant positionnée de la même façon que précédemment.

Le choix de positionnement de la grille 47 dépend du positionnement et de l'orientation que l'on souhaite donner aux câbles à l'extrémité de la grille opposée au boîtier 5. Ici la grille 47 s'étend parallèlement et à l'écart du panneau de l'armoire le long duquel s'étend le boîtier 5.

Selon une variante des modes de réalisation précédents on peut prévoir pour le mode de réalisation des figures 1 à 5 que ce soit la partie défonçable 42 qui soit arrachée et donc que la grille soit disposée à travers l'ouverture correspondant à la découpe 40 ou pour le mode de réalisation présenté aux figures 6 à 8 que ce soit la partie défonçable 43 qui soit arrachée de sorte que la grille 47 soit positionnée au travers de l'ouverture correspondant à la découpe 41. Et pour chaque cas précédent, la grille 47 peut être positionnée dans deux sens différents c'est-à-dire la partie concave regardant dans une direction ou dans une direction opposée, au choix de l'installateur.

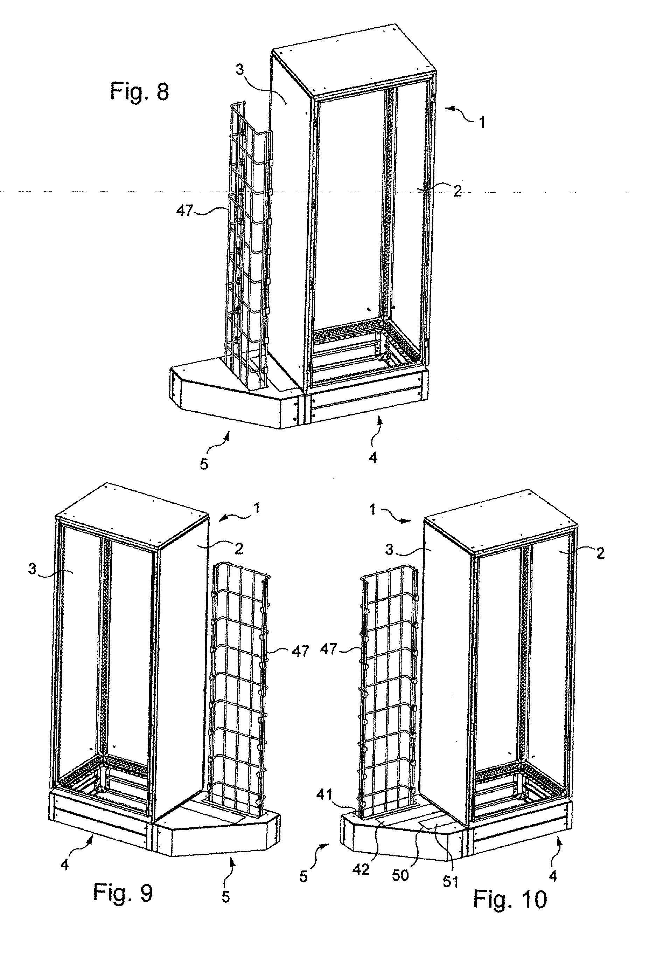

Selon une variante du mode de réalisation représenté aux figures 6 et 7, la plaque d'obturation 20 obture l'ouverture de la portion 10 de sorte que la portion 11 est la portion qui est disposée contre le socle 4 (fig.9).

Selon une variante du mode de réalisation représenté à la figure 1, le couvercle 7 comporte une troisième découpe 50 parallèle aux découpes 40, 41 et qui s'étend à partir du bord 30 (fig.10). Elle présente la même largeur que les découpes 40, 41 mais une longueur plus limitée de sorte qu'elle est adaptée à des grilles de cheminement de câbles moins larges. Dans le mode de réalisation représenté sur la figure 10, la découpe 50 est obturée par une partie défonçable 51 également reliée au reste du couvercle 7 par des pontets de très petite taille (non représentés) facilement déchirables à l'enfoncement de la partie défonçable 51.

Selon un autre mode de réalisation les câbles cheminent dans une goulotte en plastique ou en tôle, la goulotte pénétrant dans le boîtier.

Selon une variante du mode de réalisation représenté sur la figure 1, aucune des portions 10 et 11 ne comporte de plaque d'obturation 20. La découpe 41 débouche sur le bord du couvercle 7, le boîtier 5 présente donc une ouverture latérale réunissant l'ouverture 46 et l'ouverture latérale de la portion 11.

Dans ce cas, la grille 47 est fixée à un mur contre lequel est positionnée l'armoire de sorte qu'on positionne le boîtier 5 le faisant glisser sur le sol, ouverture 46 vers la grille 47 jusqu'à ce que l'ouverture 46 entoure la grille 47.

Selon une variante de réalisation, le socle 4 est fixé au sol par l'intermédiaire des supports 25 inférieurs.

Selon un mode de réalisation non représenté, le boîtier comporte une plaque de fond.

Selon encore un autre mode de réalisation, la paroi latérale présente entre les deux portions transversales et une portion en arc de cercle de sorte que le socle présente la forme d'un prisme de base en quart de disque.

## Revendications

1. Armoire pour appareils électriques, laquelle armoire (1) comporte un socle (4) présentant une trappe de passage pour des câbles, **caractérisée en ce qu'**elle comporte en outre un boîtier (5) saillant dudit socle (4), lequel boîtier (5) comporte une face supérieure (38) présentant une ouverture (46) pour goulotte (47) et une face latérale (10) présentant une ouverture de passage en regard de ladite trappe dudit socle (4).

2. Armoire selon la revendication 1, **caractérisée en ce que** ladite face latérale (10) dudit boîtier présentant ladite ouverture de passage est disposée transversalement à une deuxième face latérale (11) qui comporte également une ouverture de passage, ces deux dites faces (10, 11) présentant le même contour.

3. Armoire selon la revendication 2, **caractérisée en ce que** lesdites faces latérales (10, 11) présentent le même contour que le côté dudit socle (4) contre lequel ledit boîtier (5) est disposé.

4. Armoire selon la revendication 3, **caractérisée en ce que** ledit boîtier (5) comporte de part et d'autre de chaque dite ouverture de passage des moyens de fixation (22, 23, 24) adaptés à la fixation dudit boîtier (5) sur ledit côté.

5. Armoire selon la revendication 4, **caractérisée en ce que** ladite ouverture de passage de la face latérale (11) qui s'étend transversalement audit côté est obturée par une plaque d'obturation, lesdits moyens de fixation (22, 23, 24) étant également adaptés à la fixation de ladite plaque d'obturation (20).

6. Armoire selon l'une quelconque des revendications 2 à 5, **caractérisée en ce que** ledit boîtier (5) comporte une troisième face latérale (14) disposée obliquement par rapport à chacune des dites faces latérales (10, 11) comportant une dite ouverture de passage.

7. Armoire selon l'une quelconque des revendications 2 à 6, **caractérisée en ce que** ledit boîtier (5) comporte un couvercle (7) dans lequel est ménagée ladite ouverture (46) pour goulotte (47), ledit couvercle (7) étant plat, orienté parallèlement à ladite face supérieure (38) dudit socle (4) et présentant un contour adapté au contour déterminé par lesdites faces latérales (10, 11, 14), ledit couvercle (7) étant réversible de sorte que ladite ouverture (46) présente une orientation prédéterminée par rapport à ladite trappe ou une orientation transversale à ladite orientation prédéterminée.

8. Armoire selon la revendication 7, **caractérisée en ce que** ledit couvercle (7) comporte deux dites ouvertures (46) pour goulotte (47).

9. Armoire selon la revendication 8, **caractérisée en ce que** lesdites ouvertures (46) pour goulotte (47) sont rectangulaires et de mêmes dimensions.

10. Armoire selon l'une quelconque des revendications 8 ou 9, **caractérisée en ce que** lesdites ouvertures (46) pour goulotte (47) sont disposées parallèlement l'une à l'autre.

11. Armoire selon l'une quelconque des revendications 8 à 10, **caractérisée en ce que** l'une desdites ouvertures est obturée par une portion défonçable (42, 43).

12. Armoire selon l'une quelconque des revendications 8 à 11, **caractérisée en ce que** ledit couvercle (7) comporte une troisième ouverture pour goulotte (47) similaire auxdites deux ouvertures (46) pour goulotte (47), lesdites ouvertures (46) étant parallèles entre elles.

13. Armoire selon la revendication 12, **caractérisée en ce que** ladite troisième ouverture pour goulotte (47) présente une longueur inférieure à celle desdites autres ouvertures (46) pour goulotte (47).

14. Armoire selon l'une quelconque des revendications 2 à 13, **caractérisée en ce que** ledit boîtier comporte une première pièce en coin (19) disposée à la jonction entre lesdites faces latérales (10, 11) disposées transversalement l'une par rapport à l'autre et une deuxième pièce en coin (19) et une troisième pièce en coin (19) chacune disposée à une extrémité d'une dite face latérale respective (10, 11), à l'opposé de ladite première pièce en coin (19), ledit socle (4) comportant en outre une paroi latérale (21) fixée auxdites deuxième et troisième pièces en coin (19).

15. Armoire selon la revendication 14, **caractérisée en ce que** ledit socle (4) comporte en outre une plaque d'obturation (20) fixée auxdites première et deuxième pièces en coin (19).

16. Armoire selon l'une quelconque des revendications 14 ou 15, **caractérisée en ce que** ladite paroi latérale (21) présente une portion (14) disposée transversalement à la bissectrice (15) de l'angle formé par lesdites faces latérales (10, 11) transversales l'une à l'autre.

17. Armoire selon l'une quelconque des revendications 1 à 16, **caractérisée en ce que** ledit socle (4) de l'armoire comporte pour côtés un panneau frontal, un panneau de fond et deux panneaux latéraux, ledit boîtier (5) étant disposé contre l'un ou l'autre desdits panneaux latéraux.
